# EUROPEAN PATENT APPLICATION

(11) **EP 2 824 587 A1**
(43) Date of publication of application: **14.01.2015**
(21) Application number: 13176130.6
(22) Date of filing: 11.07.2013
(51) Int. Cl.: G06F 17/30

(54) **A method of supplementing search results of a search engine and a method for returning search results by a search engine**

(71) Applicant: Junge Meister* GmbH, 10623 Berlin (DE)
(72) Inventor: Hildebrand, Andreas, 10707 Berlin (DE)
(74) Representative: Müller, Wolfram Hubertus

(57) **Abstract**

The invention provides for a method of supplementing search results of a search engine (104) which is adapted to search for information in the world wide web. The method is characterized in that a list (3) of multimedia items which identifies at least one multimedia item (31-34) is provided to a search engine (104), wherein the at least one multimedia item (31-34) is associated with a particular website (10) and/or at least one keyword (11) associated with the particular website (10). The invention further provides for a method for returning search results by a search engine.

## Description

### FIELD OF THE INVENTION

The present invention regards a method of supplementing search results of a search engine and a method for returning search results by a search engine.

### BACKGROUND

Search engines which search information on the world wide web are known. The search results are generally presented in a line of results which is referred to as search engine results pages. It is also known that search engines provide results of a particular category only in a results page, e.g., in the form of web pages, images or other types of files.

Search engines which search information on the world wide web generally work by storing information about web pages that are retrieved by a web crawler. The content of each page is analyzed to provide for indexing of the web page.

Document WO 2009/073219 A2 discloses systems and methods for integrating third-party information, such as third-party rating information, over the search results. The integrated third-party information in the search results provides users additional information to determine which search results to click on for more details. For example, users are allowed to choose which third-party data sources shall be included their search results.

Document US 2007/0239716 A1 discloses a method of generating specialized search results which allows third party content providers to create enhancements to a search results page triggered on queries matching certain patterns.

There is an ongoing need to improve the information that is provided and displayed in a search engine results page. Accordingly, one object of the present invention is to provide for a method that influences search results of a search engine in a manner that additional information is made available to a user. Also, a method for returning search results by a search engine shall be provided that provides additional information to a user.

### SUMMARY OF THE INVENTION

The invention provides for a method of supplementing search results of a search engine with the features of claim 1 and a method for returning search results by a search engine with the features of claim 13. Embodiments of the invention are identified in the dependent claims.

Accordingly, in one aspect of the invention, there is provided a method of supplementing search results of a search engine which is adapted to search for information in the world wide web. The method is characterized in that a list of multimedia items which identifies at least one multimedia item is provided to a search engine. The at least one multimedia item is associated with a particular website and/or at least one keyword associated with the particular website. Such list of multimedia items is then automatically used by the search engine for generating search results, such that the provision of the list influences and supplements the search results of the search engine.

The invention has the effect that, after a textual search query has been inputted in a search mask of the search engine by a user, a search engine results page is received that includes information in a particular manner: in case the search results page includes the particular website, the received results page displays not only textual information about the particular website as it is commonly known, but in addition a representation of at least one multimedia item of the list of multimedia items. In one embodiment, a plurality, e.g., 2, 3, 4, 5, 6 or more multimedia items are displayed.

Accordingly, by providing to the search engine a list of multimedia items, the search results are changed in that the search engine results page additionally includes at least one multimedia item of the list of multimedia items that is associated with a particular website and/or at least one keyword associated with the particular website. The list of multimedia items is typically provided by the website operator. The inventive method thus allows the website operator to provide additional content to a search engine in order that the search engine includes this additional content which is multimedia content in the search results page.

In this respect, it is pointed out that the search results pages considered by the present invention are those of the content type "web", sometimes also referred to as the content type "text" or "text information". There exist other search results pages, e.g., of the content types "images", "videos" or "shopping" that are not considered by the present invention. In state of the art search result pages, textual and multimedia information is seperated. The present invention, on the other hand, allows that a search engine supplements search results pages that are of the content type "web pages" with multimedia information.

The present invention differs from known methods of providing multimedia information such as images, video and audio by a search engine in that the multimedia information that is additionally displayed in a search results page is multimedia information that has been provided by the website operator and which is associated with a particular website that the operator operates. The website operator thus has the possibility to influence what kind of multimedia information is displayed in a search results page that lists information about the particular website according to the keyword(s).

The inventive method is associated with the plurality of advantages both for the website operator and for the search engine operator. Regarding advantages of the website operator, the website operator improves the information that is provided about his website in the search engine results page in that additionally multimedia information such as images and video are displayed in the web / text results page. The textual information that is usually provided about a particular website in a search engine results page is thus enhanced and improved by the additional representation of multimedia information.

The provision of multimedia information such as images and videos in the search engine results page also increases the likelihood that a user clicks and hyperlinks into a particular website.

Further, the provision of the list of multimedia items to the search engine gives the website operator more control about the presentation of his website and a search engine results page by being able to additionally include multimedia information. This, for example, provides for a difference to search engines that search images such "google image search" in which the provided image information is not displayed together with textual information about a particular website.

A further advantage of the present invention for the website operator is the fact that the displayed multimedia such as images and videos can be used to provide for advertisement which respect to products or services provided by the particular website in a regular web / text search result.

The present invention is also associated with a plurality of advantages for the search engine operator. For example, in case of a semantic search engine it can learn what kind of images and videos are of interest to users and produce the highest number of clicks. The search engine can also offer additional services to a website operator by providing to the website operator an evaluation of the clicks. The search engine can also improve its own image search by using the information provided by the list of multimedia items.

Further, by displaying multimedia items in addition to textual information about a particular website, a user is more stimulated to scroll through the search engine results pages, which improves the value of results displayed on a subsequent results page (and not displayed on the first results page). This also allows a search engine operator to offer more advertising space on a subsequent results page.

It is pointed out that the present invention does not change the search algorithm of a search engine. The present invention takes the search algorithm of the search engine as it is. The provision of multimedia items in the search engine results page is caused by providing a list of multimedia items to the search engine according to the by the website operator desired keywords and not by changing the search algorithm of the search engine.

There are a plurality of embodiments of how the list of multimedia items can be provided to the search engine. According to one embodiment, the list of multimedia items is provided to the search engine by uploading the list to a search engine's server. The list is, e.g., in the form of an an Excel file, CSV file, XML list or ODL list.

According to another embodiment, the list of multimedia items is provided to the search engine by providing the list or a link to the list in the particular website such that it can be identified by a search engine web crawler. For example, the list of multimedia items or a link to the list is provided in a meta element of the particular website, such as the meta element "robots" or the meta element "keywords". In another embodiment, the list of multimedia items or a link to the list is provided on a specific web page of the particular website. Such specific web page may be part of a subdomain of the particular website. By indexing the pages of the specific website in the normal course of searching websites, the list is automatically indexed by the search engine.

A further embodiment of how the list of multimedia items is provided to the search engine is to identify the list or a link to the list in a site map of a particular website.

In an embodiment of the invention, the multimedia items are displayed in a defined area in a results page that is separate from an area of the results page that identifies textual information about the particular website. For example, the multimedia items are displayed in a defined area in the results page that is below or to the side of the area of the results page that identifies textual information about the particular website.

As already mentioned, the multimedia items may include in particular image files, audio files and/or video files. If the multimedia item is an image file, the representation of the image file shown in the results page may be the image itself, possibly in a low resolution. If the multimedia item is a video file, the representation of the video file shown in the results page may be a typical image of the video, or video media player. If the multimedia item is an audio file, the representation of the audio file shown in the results page may be an image identifying meta data about the audio file, such as the photo of an artist or a drawing including the title of the audio file or an audio media player.

In each case, by clicking on the respective multimedia representation, a hyperlink to the multimedia item is opened such that the multimedia item can be looked at, viewed or listened to.

As discussed, the list of multimedia items is provided to the search engine by the operator of the particular website in a preferred embodiment. However, in principle, the list of multimedia items could also be provided to the search engine by a different source, such as a user of a particular website.

The invention further regards a method for returning search results by a search engine which adapted to search for information in the world wide web. The method comprises the steps:
- receiving or retrieving by the search engine a list of multimedia items which identifies at least one multimedia item, the at least one multimedia item being associated with a particular website and/or at least one keyword associated with the particular website;
- receiving at least one textual search query; and
- returning a search engine results page related to the search query, wherein in case the search engine results page includes the particular website, it includes both textual information about the particular website and at least one representation of at least one multimedia item of the list of multimedia items.

The method for returning search results by a search engine of claim 13 identifies the invention from the perspective of the search engine, wherein the method of influencing search results of a search engine of claim 1 defines the invention from the perspective of the operator of a particular website.

In an embodiment of the method, the list of multimedia items is received by the search engine by downloading the list by a search engine's server. In a further embodiment, the list of multimedia items is retrieved by the search engine by retrieving the list from the particular website.

### BRIEF DESCRIPTION OF THE DRAWINGS

- FIG. 1: illustrates an embodiment of a method of influencing search results of a search engine, wherein a list of multimedia items is provided to a search engine;
- FIG. 2: is a typical representation of a search engine web results page provided to a user in accordance with the method of FIG. 1, wherein the search engine web results page includes both textual information about a particular website and a representation of at least one multimedia item;

- FIG. 3: is a table that identifies four examples of how a list of multimedia items is provided for influencing search results in a search engine results page;
- FIG. 4: illustrates the working of a web search engine according to the state of the art; and
- FIG. 5: illustrates a state of the art search engine web results page.

### DETAILED DESCRIPTION

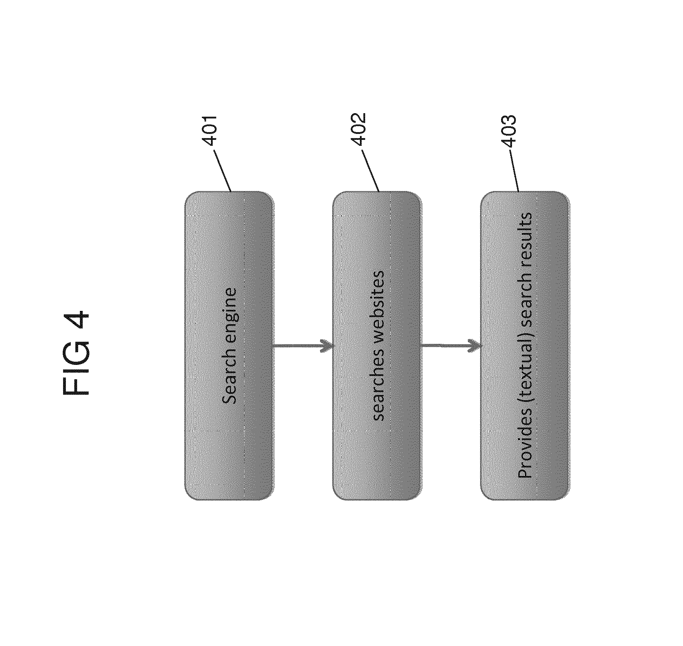

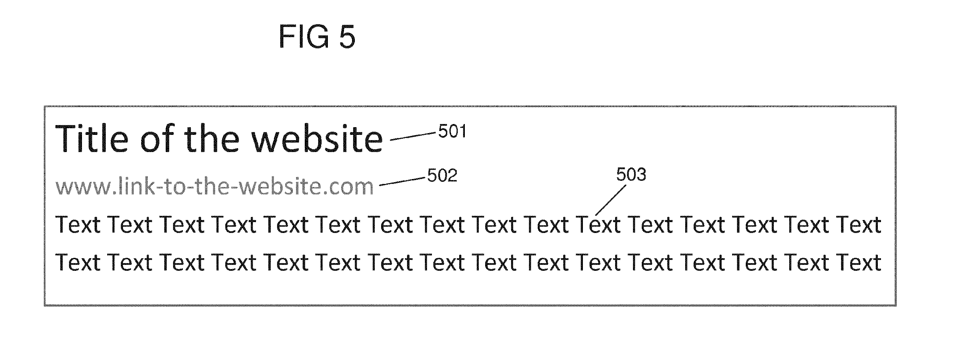

For better understanding of the present invention, it is first discussed the prior art of known search engines and how they provide search results pages by referring to FIGS. 4 and 5. According to FIG. 4, there is provided a search engine in step 401 that is configured to search websites, step 402. The searching of websites takes place, e.g., by means of a web crawler and typically includes indexing the content of webpages. In response to a search query, the search engine provides search results, step 403. Typically, the search results are provided in the form of search engine results pages of the content type "web/text", which include textual information about particular websites. There can also be provided search engine results pages of different types such as "images" which, however, are not considered by the present invention.

FIG. 5 shows a typical item of a search engine results page according to the state of the art. The item included in the results page includes the title of the website 501. Below the title of the website, there is indicated the domain name 502. Below the domain name 502 there is included a text 503. This text may be the content of the meta element "description" of the website. It may also be any other text which may be found on the web site and which was retrieved in accordance with a specific search query. Such textual information is included for each website listed in a search engine results page.

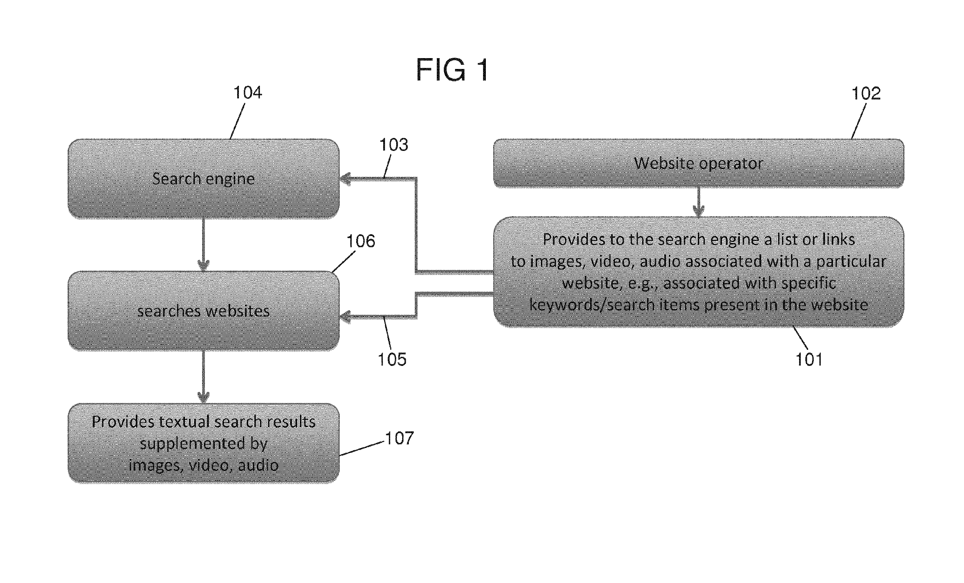

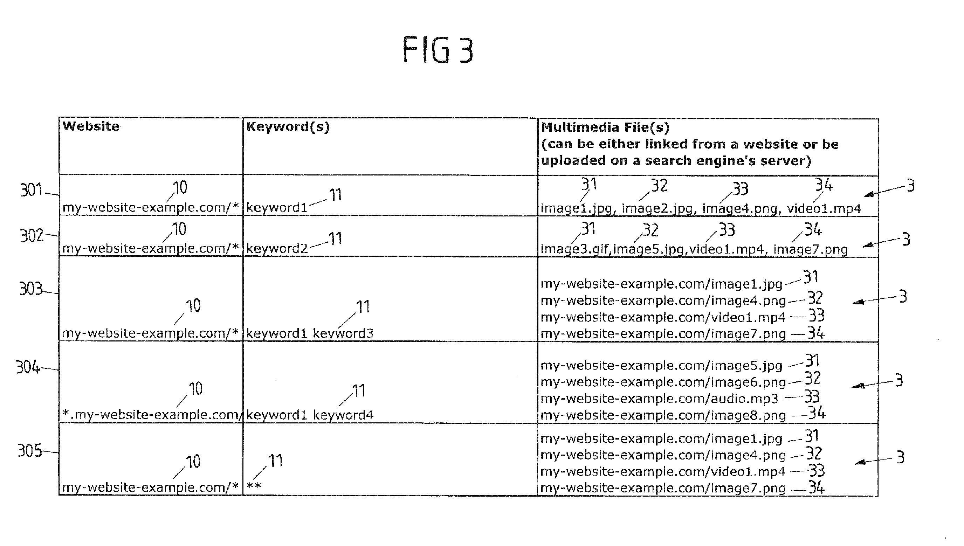

FIG. 1 illustrates an embodiment of a method of influencing search results in accordance with the present invention. The method includes a step 101 of providing to a search engine a list of multimedia items such as images, video and audio according to the website operator desired keyword(s). The list may contain the multimedia items themselves or links to such multimedia items. The items are associated with a particular website. For example, they are included in one or several web pages of the website or of a subdomain of the website. The association with the website may be of general nature or may be further specified by association with a specific search item such as a specific keyword. Examples of such associations will be discussed further below with respect to FIG. 3.

The list of multimedia items is provided by a website operator 102 who assembles the list. The list of multimedia items may be provided in step 103 to a search engine 104 by uploading the list to a server of the search engine.

Additionally or alternatively, the list of multimedia items may be included on the particular website with which the multimedia items are associated, and/or on websites linked to such particular website. For example, the list of multimedia items or a link to the list or items of the list are provided in a specific webpage of a particular website, and/or in a site map of the particular website, and/or in a meta element such as the meta element "robots" of the particular website. Thereby, when the search engine in the course of its normal webcrawling activities visits the website in step 106, it will automatically retrieve the list of multimedia items that are associated with the keywords for the particular website.

Accordingly, when the search engine returns a results page in response to a textual search query in step 107, the search results are supplemented by images, video and/or audio that are associated with the particular website that is included in the results page.

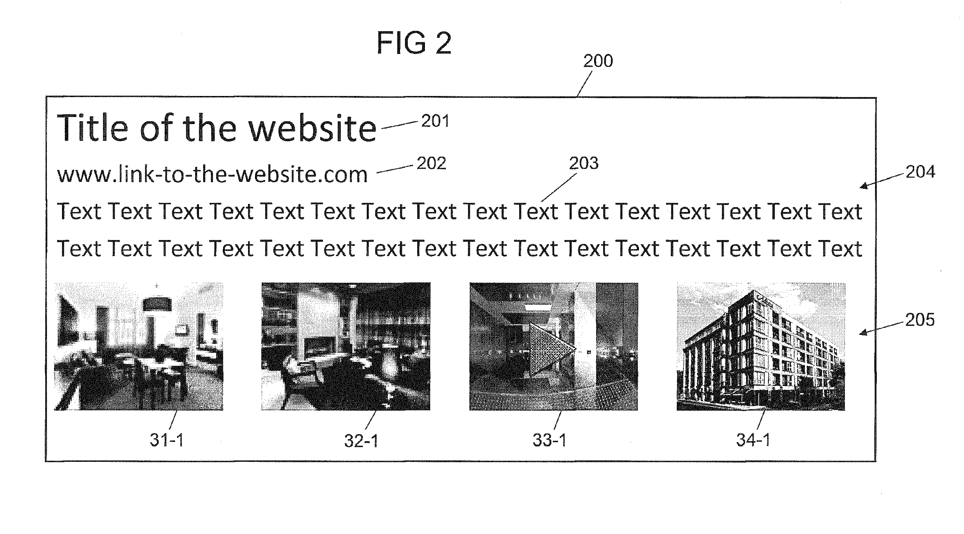

Such provision of information in a search engine results page is illustrated in FIG. 2. FIG. 2 is a detail of a search engine results page 200 that shows the information that is provided in the search engine results page with respect to a particular website which is included in the results page. The results page includes both textual information and multimedia information. The textual information is similar to the textual information known from the prior art and discussed with respect to FIG. 6, i.e., the textual information includes the title of the website 201, the domain name 202 and a specific 203 text which may be the content of the meta element "description" or any other text related to a specific key word and associated with the website.

The search results page 200 additionally includes several representations 31-1, 32-1, 33-1, 34-1 of multimedia items. The representations 31-1, 32-1 and 34-1 are images representing an image that can be viewed by clicking on the respective image. The representation 31-3 is an image representing a video file. The video file can be viewed by clicking on the respective representation 31-3.

As can be seen in Figure 2, the representations 31-1, 32-1, 33-1, 34-1 are displayed in a defined area 205 in the results page 200 that is separate from, namely, below an area 204 of the results page 200 that identifies the textual information 201-203.

The multimedia items respectively their representations 31-1, 32-1, 33-1, 34-1 are provided in the search results page 200 because they have been linked to the particular website 202 and have been included in a list of multimedia items as discussed with respect to FIG. 1. The multimedia items that are displayed (or, to be more exact, for which representations 31-1, 32-1, 33-1, 34-1 are displayed) are thus those that the website operator intended to be included in the search engine results page. They are associated with a particular website 202 and not only associated with a particular keyword.

Accordingly, for each of the representations 31-1, 32-1, 33-1, 34-1 the website operator defined which images dependent on which search query shall be shown under the textual results of a particular website displayed in the results page. The website operator defines these images independent of the search algorithm that the search engine uses by providing the search engine a list of the multimedia items and their association or linking with/to the particular website and/or specific keywords associated with the particular website.

Embodiments of such association and linking are shown in FIG. 3. FIG. 3 shows five scenarios of how multimedia files or items associated with a website are provided in a list for a search engine. Each example corresponds to a row of the table shown in FIG. 3.

According to the example of the first row 301, a multimedia list 3 contains four multimedia files 31, 32, 33, 34, three jpg-files and one mp4-file. These files 31-34 are associated both with a specific keyword 11 and a specific website 10, wherein the asterisk represents any page and/or directory of the entire website 10 and/or any subdomain of the website. The list 3 of multimedia files 31-34 and its accociations (e.g., the information of row 301) is uploaded on a search engine's server.

Accordingly, if there is a search query that includes the keyword 11, and if the search engine results page that is returned by the search engine in response to such search query includes the website 10, there is an increased likelihood that the search engine results page will also include one or several of the multimedia files 31-34 (or representations thereof), as the list 3 of multimedia files has been provided to the search engine.

The embodiment of row 302 of FIG. 3 is similar to the embodiment of row 301, wherein the multimedia files 31-34 may include different formats than those of the example of row 301. The list 3 and its associations are also uploaded to a search engine's server.

The embodiment of row 303 provides the list of multimedia files 31-34 on the particular website itself. As can be seen, the multimedia files 31-34 are provided a specific webpage of the website 10. The association of the multimedia files 31-34 is both with the website 10 and with one or several specific keywords 11.

The list 3 of multimedia items 31-34 and the specific link or association between the website 10, specific keywords 11 and the list 3 of multimedia items 31-34 provided on the website are identified, e.g., by a web crawler of the search engine and considered when indexing the website.

The embodiment of row 304 is similar to the embodiment of row 303, except that the website 10 regards a subdomain.

In the embodiment of row 305, the list 3 of multimedia items 31-34 is also provided on the website. The list 3, however, is generally linked or associated to the specific website 10 only regardless of specific keywords that may be used. The display of at least one item of the multimedia file 3 in a search engine results page is thus triggered already by a particular website 10 that is included in the search engine results page, irrespective of the specific keyword that has been used for the search query. The two asterisks 11 in row 305 thus represent any keyword or keywords that may have been used when a page or link of the website 10 is shown in the search results of a search engine.

Although the present invention has been described and illustrated in respect to exemplary embodiments, it is to be understood that it is not to be so limited, and changes and modifications may be made therein which are within the full intended scope of this invention.

## Claims

1. A method of supplementing search results of a search engine (104) which is adapted to search for information in the world wide web,
**characterized in that**
a list (3) of multimedia items which identifies at least one multimedia item (31-34) is provided to a search engine (104), wherein the at least one multimedia item (31-34) is associated with a particular website (10) and/or at least one keyword (11) associated with the particular website (10).

2. The method according to claim 1, **characterized by** the step of, in response to a textual search query inputted in a search mask, receiving a search engine results page (200) of the content type "web/text", wherein in case the search engine results page (200) contains the particular website (10), the received results page (200) includes both textual information (201-203) about the particular website (10) and at least one representation (31-1, 32-1, 33-1, 34-1) of at least one multimedia item (31-34) of the list of multimedia items (3).

3. The method according to claim 1 or 2, **characterized in that** the list (3) of multimedia items is provided to the search engine (104) by uploading (103) the list (3) to a search engine's server.

4. The method according to claim 1 or 2, **characterized in that** the list (3) of multimedia items is provided to the search engine (104) by providing the list (3) or a link to the list in the particular website (10) such that it can be identified by a search engine web crawler.

5. The method according to claim 4, **characterized in that** the list (3) of multimedia items or a link to the list is provided in a meta element of the particular website (10).

6. The method according to claim 4, **characterized in that** the list (3) of multimedia items or a link to the list is provided on a specific web page of the particular website (10) or is identified in a site map of the particular website (10).

7. The method according to any preceding claim, **characterized in that** the list (3) of multimedia items includes
- the at least one multimedia item (31-34) or a link to such item;
- the association of the at least one included multimedia (31-34) item with the particular website (10), and/or
- the association of the at least one included multimedia (31-34) item with at least one keyword (11) associated with the particular website (10) and chosen by a website operator as a desired keyword.

8. The method according to any preceding claim, as far as dependent on claim 2, **characterized in that** the at least one representation (31-1, 32-1, 33-1, 34-1) of at least one multimedia item (31-34) of the list (3) is displayed in a defined area (205) in the results page (200) that is separate from an area (204) of the results page (200) that identifies textual information (201-203) about the particular website (10).

9. The method according to claim 8, **characterized in that** the at least one representation (31-1, 32-1, 33-1, 34-1) of at least one multimedia item (31-34) of the list (3) is displayed in a defined area (205) in the results page (200) that is below the area (204) of the results page (200) that identifies textual information (201-203) about the particular website (10).

10. The method according to any preceding claim, as far as dependent on claim 2, **characterized in that** the multimedia item (31-34) is an image file, wherein the representation (31-1, 32-1, 33-1, 34-1) of the image file shown in the results page (200) is the image.

11. The method according to any preceding claim, as far as dependent on claim 2, **characterized in that** the multimedia item (31-34) is a video file, wherein the representation (31-1, 32-1, 33-1, 34-1) of the video file shown in the results page (200) is an image of the video, or a video media player.

12. The method according to any preceding claim, **characterized in that** the list (3) of multimedia items is provided to the search engine (104) by the operator (102) of the particular website (10).

13. A method for returning search results by a search engine (104) which is adapted to search for information in the world wide web, comprising:
- receiving or retrieving (103, 106) by the search engine (104) a list (3) of multimedia items which identifies at least one multimedia item (31-34), the at least one multimedia item (31-34) being associated with a particular website (10) and/or at least one keyword (11) associated with the particular website (10);
- receiving at least one textual search query; and
- returning a search engine results page (200) of the content type "web/text" related to the search query, wherein in case the search engine results page (200) includes the particular website (10), it includes both textual information (201-203) about the particular website (10) and at least one representation (31-1, 32-1, 33-1, 34-1) of at least one multimedia item (31-34) of the list of multimedia items (3).

14. The method according to claim 13, **characterized in that** the list (3) of multimedia items (31-34) is received by the search engine (104) by downloading the list by a search engine's server (101).

15. The method according to claim 13, **characterized in that** the list (3) of multimedia items (31-34) is retrieved by the search engine (104) by retrieving the list from the particular website (10).
